# EUROPEAN PATENT APPLICATION

(11) **EP 2 679 852 A1**
(43) Date of publication of application: **01.01.2014**
(21) Application number: 13173259.6
(22) Date of filing: 21.06.2013
(51) Int. Cl.: F16D 65/092

(54) **Brake backing plate with step-chamfer**

(30) Priority: 26.06.2012 CA 2781540
(71) Applicant: Arbesman, Ray, Toronto, Ontario M5P 1V2 (CA); Pham, Nghi, Concord, Ontario L4K 2E4 (CA)
(72) Inventor: Arbesman, Ray, Toronto, Ontario M5P 1V2 (CA); Pham, Nghi, Concord, Ontario L4K 2E4 (CA)
(74) Representative: Bates, Alan Douglas Henry

(57) **Abstract**

A brake plate (100) is provided that has a substantially planar metallic body with a first friction facing surface (110), a second opposing caliper facing surface (120), a pair of relatively long edges(130, 140), and a pair of relatively short edges (150). At least one of the long edges has a step-chamfer (190).

## Description

### FIELD OF THE INVENTION

The invention relates to backing plates for use in disc brake pads.

### BACKGROUND OF THE INVENTION

Modern vehicle brake systems allow for slowing or stopping movement of the vehicle in a controlled manner. A typical automobile or light truck brake system includes a disc brake assembly for each of the front wheels and either a drum brake assembly or a disc brake assembly for each of the rear wheels. The brake assemblies are actuated by hydraulic or pneumatic pressure generated when an operator of the vehicle depresses a brake pedal. The structures of these drum brake assemblies and disc brake assemblies, and their actuators, are well known in the art.

A typical disc brake assembly includes a rotor which is secured to the wheel of the vehicle for rotation therewith. The rotor has a pair of opposed friction plates which are selectively engaged by portions of a caliper assembly. The caliper assembly is slidably supported by pins secured to an anchor plate. This anchor plate is in turn secured to a non-rotatable component of the vehicle, such as the vehicle frame. A pair of brake pads (shoes) are disposed in the caliper assembly on opposite sides of the rotor. These brake pads are operatively connected to one or more hydraulically actuated pistons for movement between a non-braking position, wherein they are spaced apart from the opposed friction plates of the rotor; and a braking position, wherein they are moved into frictional engagement with the opposed friction plates of the rotor. Depressing the brake pedal causes the piston to urge the brake pads from the non-braking position to the braking position, frictionally engaging the friction plates to the rotor and thereby slowing or stopping the rotation of the associated wheel of the vehicle.

The brake caliper is typically a cast solid piece of iron, steel or aluminum. The casting process leaves rounded interior edges. In order to provide corner clearance with these rounded interior edges, the brake pads, themselves planar and angular, are frequently chamfered on one edge where the mounted pad faces the interior corner of the caliper.

The classic chamfer on the backing plate portion of the brake pad is an angled surface on the leading edge of the plate that substantially mirrors (or at least provides complementary geometry with) the rounded angled surface in the interior corners of the caliper. The chamfer and the corner of the caliper, lacking points of potential unwanted contact, thus have clearance from each other. However, such chamfered edges, while elegant, are not easy to produce, particularly on brake backing plates having a rounded or other irregular shaped leading edge.

Further, although routinely manufactured for backing plates, the chamfered angle is not needed for every shape of caliper. Therefore, an extra costly and time-consuming secondary step is often needlessly included. Chamfering has become an ingrained and expected part of the manufacturing process for backing plates.

It would be desirable to provide a simple alternative to the complex chamfer.

### SUMMARY OF THE INVENTION

According to an aspect of the invention, a brake plate is provided that has a substantially planar metallic body with a first friction facing surface, a second opposing caliper facing surface, and a pair of relatively long edges and a pair of relatively short edges. At least one of the long edges has a step-chamfer. The step-chamfer is preferably proximate to the second caliper facing surface.

Preferably, the step-chamfer has one step. Preferably, the step is substantially L-shaped. Preferably, the step-chamfer extends along the full length of the plate. In one embodiment, the step-chamfered edge is rounded along its length.

Preferably, the plate is an integrally molded brake plate. Preferably, the plate is formed to receive friction material on the first friction facing surface, and the friction material does not contact the step-chamfer.

Preferably, the plate is sized to fit in a brake caliper, such that the step-chamfered edge will sit adjacent to an inside corner or radius of the caliper. Preferably, the step-chamfer is sized to allow clearance for the plate to sit adjacent to the corner or radius of the caliper.

### BRIEF DESCRIPTION OF THE FIGURES

Figures 1-2 are views (front perspective and partial section, respectively) of the prior art angle chamfer on a brake backing plate.
Figure 3 is a front perspective view of the brake backing plate with step-chamfer.
Figure 4 is a top view of the leading edge showing step-chamfer.
Figure 5 is a partial sectional view of Figure 4 showing the step-chamfer.
Figure 6 is a front view of the brake backing plate with the step-chamfer.
Figure 7 is a side view of the brake backing plate with the step-chamfer.
Figure 8 is a side view of brake pads using the step-chamfer mounted in a simplified caliper.
Figure 9 is a detailed view of the circled area of Figure 8.

### DETAILED DESCRIPTION

A brake plate is provided that has a substantially planar metallic body. The body has a first friction facing surface and a second caliper facing surface, and a pair of relatively long edges and a pair of relatively short edges. At least one of the long edges has a step-chamfer.

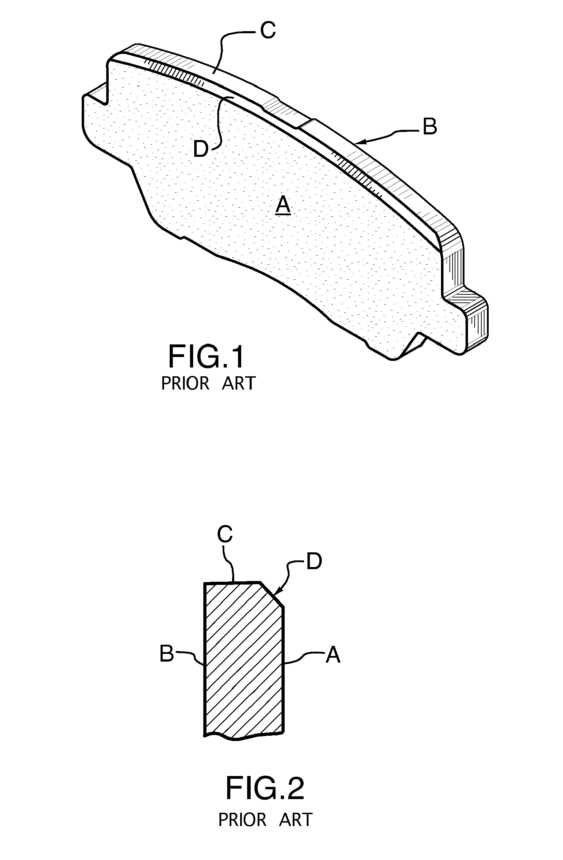

As shown in Figures 1 and 2, prior art chamfers use an angled surface **D** on the corner of the leading edge **C** facing the caliper facing surface **A.** Typically, this is approximately a 45° angle. It serves to provide clearance for the leading edge in the inside corner of the caliper in which the plate is to be mounted. Surface **B** of the plate receives the friction material and does not typically have a chamfer.

The angle chamfer is typically made by grinding or mill-cutting the leading edge. Besides being an expensive and time-consuming secondary operation, the angle chamfer can be particularly difficult to produce where the leading edge **C** is rounded along its length (i.e. where the top of the brake backing plate is arcuate from edge to edge) or has recessed areas or other edge features (as shown in Figure 1).

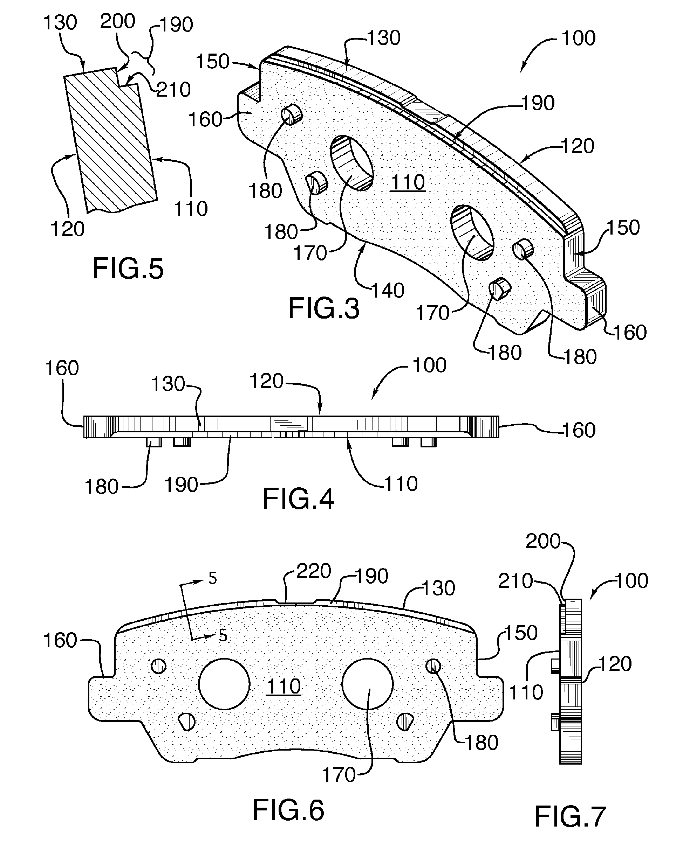

By contrast, the step-chamfer shown in Figures 3-7 allows the same clearance objective to be met, while the design has manufacturing simplicity across a variety of plate applications and requirements. The angular ledge of the step-chamfer could also be used as a further gripping or attachment surface (e.g. for tabbed or clipped shims).

Turning to Figures 3-7, the plate **100** is a relatively thick, substantially planar metallic body (e.g. steel). The plate has generally two faces - a first caliper-facing surface **110,** and a second friction-facing surface **120.** The backing plate is one portion of the brake pad. The backing plate is attached to a friction material (typically a molded composite material that is attached to the plate with one or a combination of rivets, adhesive, integral-molding, or frictional attachment - e.g. NRS^{®}). The plate shown in the figures is an IM (integrally molded) plate, having integral-molding holes **170** into which friction material flows and hardens to solidify and retain friction material on the surface **120.** It will be appreciated that the plate may alternatively be a solid body plate (having no integral-molding holes) and may have other friction-attaching surface features, the details of which are known in the art, and are not generally within the scope of the present invention. (Note that the friction material in any of these methods does not extend all the way out to the edges of the plate. An exposed gap is maintained around the perimeter of the plate.)

The shapes and dimensions of brake backing plates vary widely depending on application. The shape shown in the drawings is merely exemplary of one type for certain models of passenger vehicles, but the invention is not limited to this type/application. A backing plate can be thought of as having two long sides - leading edge **130** and trailing edge **140** - and two identical short sides (here, both labelled **150).** The short sides may have abutments **160** in certain embodiments. (The abutments are exposed mounting extensions that are not covered by friction material and are used for installation and retention of the brake pad in certain caliper designs.) The leading and trailing edges of the backing plate may also have other recesses (e.g. **220),** projections (e.g. **180),** and other surface features as may be required for particular applications and/or to provide clearance for other mounting or wear sensor hardware, springs, shims, etc.

The step-chamfer **190** is generally provided at the corner of the plate where leading edge **130** meets surface **110.** (NB: This is an area not covered by the friction material.) The step-chamfer is preferably substantially L-shaped, having one step. As shown in Figure 5, in cross-section, horizontal offset **210** and vertical offset **200** are preferably substantially flat and generally perpendicular to each other. The offset distances of the step-chamfer surfaces **210** and **200** may be substantially the same length (as shown) (thereby approximating the effect of a 45° angle chamfer), or have distances of different lengths as may be preferred to provide other clearance angles. The offsets may or may not be perpendicular to each other. Also, the offset distance of surface **200** may be varied along its length, approximating a compound chamfer. The step-chamfer may be multi-step or single-step. Further, although flat offsets are described, it will be appreciated that one or both of **200, 210** (or the step-chamfer 190 as a whole) may be rounded or filleted (e.g. having a "scooped out" profile). The ability to modify the shape and dimensions easily to achieve different effects is an advantage of the present invention.

Various dimensions are possible. Preferably, the step-chamfer does not extend into the plate more than half the overall thickness of the plate. Preserving a certain minimum plate thickness may be necessary to protect the integrity of the leading edge **130** of the plate which is an exposed contact area.

Various methods of making the step-chamfer are possible (e.g. forming or stamping methods, grinding, cutting, notching, carving, fine-blanking, etc.) and are beyond the scope of the present disclosure. Due to its simplicity, the step-chamfer may be able to be produced at the same time as other features on the plate, without a separate specialized operation.

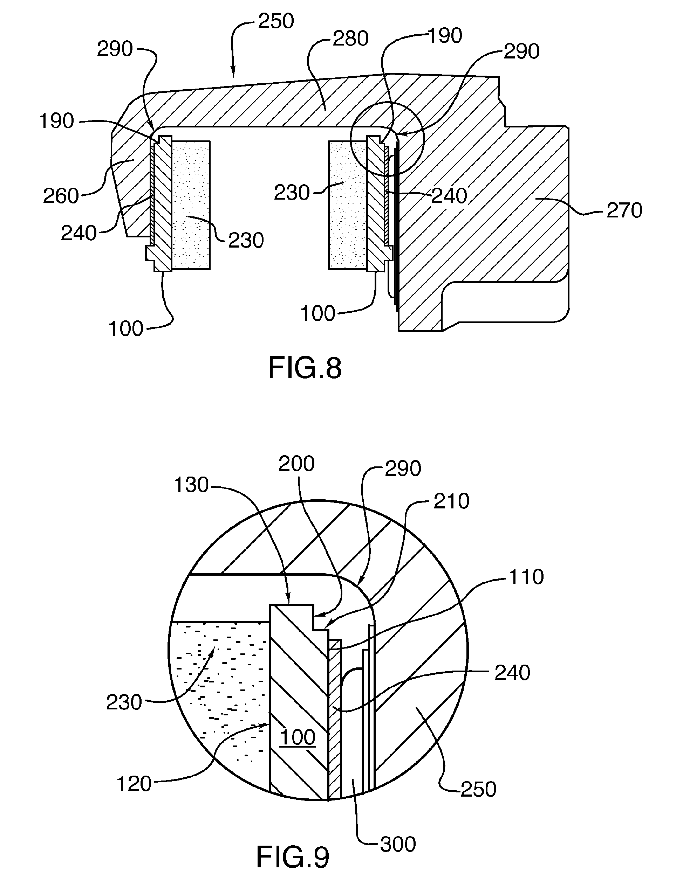

Turning to Figures 8 and 9; when the step-chamfered plate is ready to receive a friction material **230,** this is applied on surface **120.** The finished brake pads bearing friction material **230** are mounted in the caliper **250.** The friction material provides an engagement surface for mating against the rotor in braking.

In Figure 8, the brake pads are shown mounted in the caliper (shown in simplified outline for ease of understanding). The caliper **250** has a first end **260,** second end **270** and a bridge section **280** there between. The cylinder is generally defined in the end **270** and a piston **300** presses the pads generally together to contact a rotor (not shown).

The caliper **250** is typically a cast piece/assembly that may be machined in certain areas to remove surface pebbling, irregularities and rough edges, but generally is not machined to any great extent (or at all) in the interior corner areas **290.** In order to maintain overall stiffness of the caliper, thicker sections in the corners **290** of the caliper are believed necessary. Maintaining thickness in these areas is believed to be critical in reducing stress fractures and caliper breakage. As an artefact of the casting process, which is uncorrected by machining, the inside "corners" **290** are actually generally arcuate and thus provide a difficult fit for the plate corners. The step-chamfer **190** on the plate allows clearance for the corner **290** regardless of the corner's specific radius and allows considerable leeway for various casting imperfections.

A shim **240** may be provided on the piston-facing surface **110** of the plate **100** to reduce NVH (noise, vibration and harshness) incident in braking. The shim, if provided, will be smaller than the outside dimensions of the plate, thus not ordinarily contacting the chamfered edge or the inside corner of the caliper. However, it is possible that a tab of the shim may extend into and grab onto the step-chamfer as a further gripping surface. The step-chamfer may be provided with particular recesses or other attachment surfaces specifically for this purpose. The geometry of the step-chamfer is easy to modify for such features.

The foregoing description illustrates only certain preferred embodiments of the invention. The invention is not limited to the foregoing examples. That is, persons skilled in the art will appreciate and understand that modifications and variations are, or will be, possible to utilize and carry out the teachings of the invention described herein. The scope of the claims should not be limited by the preferred embodiments set forth in the examples, but should be given the broadest purposive construction consistent with the description as a whole.

## Claims

1. A brake plate comprising a substantially planar metallic body having:
a first friction facing surface;
a second opposing caliper facing surface; and
a pair of relatively long edges and a pair of relatively short edges;
wherein at least one of the long edges has a step-chamfer.

2. The brake plate of claim 1, wherein the step-chamfer is proximate to the second caliper facing surface.

3. The brake plate of claim 1 or 2, wherein the step-chamfer has one step.

4. The brake plate of claim 3, wherein the step is substantially L-shaped.

5. The brake plate of any preceding claim, wherein the step-chamfer extends along the full length of the plate.

6. The brake plate of any preceding claim, wherein the step-chamfered edge is rounded along its length.

7. The brake plate of any preceding claim, wherein the plate is an integrally molded brake plate.

8. The brake plate of any preceding claim, wherein the plate is formed to receive friction material on the first friction facing surface, and the friction material does not contact the step-chamfer.

9. The brake plate of any preceding claim, wherein the plate is sized to fit in a brake caliper, such that the step-chamfered edge will sit adjacent to an inside corner or radius of the caliper.

10. The brake plate of claim 9, wherein the step-chamfer is sized to allow clearance for the plate to sit adjacent to the corner or radius of the caliper.
